# EUROPÄISCHE PATENTANMELDUNG

(11) **EP 2 985 068 A1**
(43) Veröffentlichungstag der Anmeldung: **17.02.2016**
(21) Anmeldenummer: 14180742.0
(22) Anmeldetag: 13.08.2014
(51) Int. Cl.: B01D 53/94, B01J 35/00, B01J 23/63, B01J 29/76, F01N 3/08, F01N 3/20

(54) **Katalysator-System zur Reduktion von Stickoxiden**

(71) Anmelder: Umicore AG & Co. KG, 63457 Hanau-Wolfgang (DE)
(72) Erfinder: Hoyer, Ruediger, 63755 Alzenau-Hoerstein (DE); Utschig, Thomas, 60598 Frankfurt am Main (DE); Schiffer, Michael, 63450 Hanau (DE); Seyler, Michael, 63814 Mainaschaff (DE); Schuetze, Frank-Walter, 63739 Aschaffenburg (DE)

(57) **Zusammenfassung**

Die vorliegende Erfindung betrifft ein Katalysatorsystem zur Reduktion von Stickoxiden, das einen Stickoxidspeicherkatalysator und einen SCR-Katalysator umfasst, wobei der Stickoxid-Speicherkatalysator aus mindestens zwei katalytisch aktiven Washcoatschichten auf einem Tragkörper besteht, wobei eine untere Washcoatschicht A Ceroxid, eine Erdalkaliverbindung und/oder Alkaliverbindung, sowie Platin und Palladium enthält und eine obere Washcoatschicht B, die über der Washcoatschicht A angeordnet ist, Ceroxid, Platin und Palladium und keine Alkali- und Erdalkaliverbindung enthält, sowie ein Verfahren zur Konvertierung von NOₓ in Abgasen von Kraftfahrzeugen, die mit mager betriebenen Motoren, betrieben werden.

## Beschreibung

Die vorliegende Erfindung betrifft ein Katalysator-System zur Reduktion von Stickoxiden, das im Abgas mager betriebener Verbrennungsmotoren enthalten ist.

Abgase von Kraftfahrzeugen mit einem überwiegend mager betriebenen Verbrennungsmotor enthalten neben Partikelemissionen insbesondere die Primäremissionen Kohlenmonoxid CO, Kohlenwasserstoffe HC und Stickoxide NOx. Aufgrund des relativ hohen Sauerstoffgehaltes von bis zu 15 Vol.-% können Kohlenmonoxid und Kohlenwasserstoffe durch Oxidation leicht unschädlich gemacht werden, die Reduktion der Stickoxide zu Stickstoff gestaltet sich jedoch wesentlich schwieriger.

Es ist bekannt, Stickoxide aus Abgasen in Gegenwart von Sauerstoff mittels Stickoxidspeicherkatalysatoren, für die auch die Begriffe "Lean NOx Trap" oder LNT üblich sind, unschädlich zu machen. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.

Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu NO₂, sowie CO und HC zu CO₂ zu oxidieren und andererseits während der fetten Betriebsphasen, in denen der Stickoxid-Speicherkatalysator regeneriert wird, freigesetztes NO₂ zu Stickstoff zu reduzieren.

Ein anderes bekanntes Verfahren zur Entfernung von Stickoxiden aus Abgasen in Gegenwart von Sauerstoff ist das Verfahren der selektiven katalytischen Reduktion (SCR-Verfahren) mittels Ammoniak an einem geeigneten Katalysator, dem SCR-Katalysator. Bei diesem Verfahren werden die aus dem Abgas zu entfernenden Stickoxide mit Ammoniak zu Stickstoff und Wasser umgesetzt.

Das als Reduktionsmittel verwendete Ammoniak kann durch Eindosierung einer zu Ammoniak zersetzlichen Verbindung, wie beispielsweise Harnstoff, Ammoniumcarbamat oder Ammoniumformiat, in den Abgasstrang und anschließende Hydrolyse verfügbar gemacht werden.

Daneben ist es bekannt, Ammoniak während einer fetten Betriebsphase des Motors an einem dem SCR-Katalysator vorgeschalteten Katalysator als Sekundäremission zu erzeugen und im SCR-Katalysator bis zum Verbrauchszeitpunkt während der mageren Betriebsphasen zwischenzuspeichern. Zur Erzeugung von Ammoniak können zum Beispiel Stickoxidspeicherkatalysatoren verwendet werden, die Stickoxide wenigstens zum Teil nicht nur bis zur Stufe des Stickstoffs, sondern auch zu Ammoniak zu reduzieren vermögen. Katalysatorsysteme, die einen anströmseitigen Stickoxidspeicherkatalysator und einen abströmseitigen SCR-Katalysator enthalten sind beispielsweise in DE 100 11 612 A1, EP 0 957 242 A2, EP 1 0127 919 A2, EP 2 698,193 A1, US 7,332,135, WO2004/076829 A1, WO2005/047663 A2 und WO2010/114873 A2 beschrieben.

Die im Katalysatorsystem der WO2010/114873 A2 verwendeten Stickoxidspeicherkatalysatoren weisen zwei Schichten auf, wobei die untere Schicht direkt auf einem Durchfluss-Monolithen liegt und u.a. Ceroxid, sowie Aluminiumoxid enthält, das Ceroxid und Bariumoxid aufweist. Die obere Schicht liegt auf der unteren Schicht und enthält ebenfalls Ceroxid, allerdings in einer geringeren Menge als die unter Schicht. Beide Schichten enthalten außerdem die Edelmetalle Platin und Palladium, in der oberen Schicht trägt das Ceroxid außerdem Rhodium.

Zweischichtige Stickoxidspeicherkatalysatoren sind auch an anderer Stelle beschrieben. Beispielsweise in der EP 0 885 650 A2, aus der ein Abgasreinigungskatalysator für Verbrennungsmotoren mit zwei katalytisch aktiven Schichten auf einem Tragkörper bekannt ist. Die auf dem Tragkörper befindliche Schicht umfasst ein oder mehrere hochdisperse Erdalkalioxide, mindestens ein Platingruppenmetall, sowie wenigstens ein feinteiliges, Sauerstoff speicherndes Material. Dabei stehen die Platingruppenmetalle mit allen Bestandteilen der ersten Schicht in enger Berührung. Die zweite Schicht steht mit dem Abgas in direktem Kontakt und enthält mindestens ein Platingruppenmetall, sowie wenigstens ein feinteiliges, Sauerstoff speicherndes Material. Nur ein Teil der feinteiligen Feststoffe der zweiten Schicht dient als Träger für die Platingruppenmetalle. Der Katalysator ist ein Dreiwegekatalysator, der die schädlichen Abgaskomponenten im Wesentlichen bei stöchiometrischen Bedingungen, d.h. bei der Luftzahl λ von 1 umsetzt.

Aus der US2009/320457 ist ein Stickoxid-Speicherkatalysator bekannt, der zwei übereinander liegende Katalysatorschichten auf einem Trägersubstrat umfasst. Die untere, direkt auf dem Trägersubstrat liegende Schicht umfasst ein oder mehrere Edelmetalle, sowie ein oder mehrere Stickoxid-Speicherkomponenten. Die obere Schicht umfasst ein oder mehrere Edelmetalle, sowie Ceroxid und ist frei von Alkali- oder Erdalkalikomponenten.

Katalysatorsubstrate, die Stickoxid-Speichermaterialien enthalten und zwei oder mehr Schichten aufweisen, sind auch in der WO 2012/029050 beschrieben. Die erste Schicht befindet sich direkt auf dem Trägersubstrat und umfasst Platin und/oder Palladium, während sich die zweite Schicht auf der ersten befindet und Platin umfasst. Beide Schichten enthalten außerdem ein oder mehrere Sauerstoffspeichermaterialien und ein oder mehrere Stickoxid-Speichermaterialien, die ein oder mehrere Alkali- und/oder Erdalkalimetalle umfassen. Die Gesamtmenge an Alkali- und Erdalkalimetall in den Stickoxid-Speichermaterialien beträgt 0,18 bis 2,5 g/in³, berechnet als Alkalimetalloxid M₂O und Erdalkalimetalloxid MO.

Die vorliegende Erfindung betrifft ein Katalysatorsystem zur Reduktion von Stickoxiden, das einen Stickoxidspeicherkatalysator und einen SCR-Katalysator umfasst, wobei der Stickoxidspeicherkatalysator aus mindestens zwei katalytisch aktiven Washcoatschichten A und B auf einem Tragkörper besteht und
- die Washcoatschicht A direkt auf dem Tragkörper angeordnet ist und Ceroxid, eine Erdalkaliverbindung und/oder eine Alkaliverbindung, sowie Platin und Palladium enthält; und
- die Washcoatschicht B über der Washcoatschicht A angeordnet ist und Ceroxid, sowie Platin und Palladium enthält und frei ist von Alkali- und Erdalkaliverbindungen;
   dadurch gekennzeichnet, dass
- das Verhältnis von Ceroxid in Washcoatschicht B zu Ceroxid in Washcoatschicht A, gerechnet jeweils in g/l und bezogen auf das Volumen des Tragkörpers, 1:2 bis 3:1 beträgt, wobei die Summe von Ceroxid in Washcoatschicht A und Washcoatschicht B, gerechnet in g/l und bezogen auf das Volumen des Tragkörpers, 100 bis 240 g/l beträgt.

Unter dem Begriff Ceroxid wird im Rahmen vorliegender Erfindung zum einen Ceroxid handelsüblicher Qualität verstanden, d.h. Ceroxid mit einem Ceroxid-Anteil von 90 bis 100 Gew.-%. Der Begriff umfasst somit auch dotierte Ceroxide. Zum anderen werden unter dem Begriff Ceroxid im Rahmen vorliegender Erfindung aber auch Cer-Mischoxide verstanden, die einen Cer-Anteil von weniger als 90 Gew.-%, beispielsweise 20 bis 90 Gew.-% oder 50 bis 90 Gew.-% aufweisen. Vorteilhafterweise liegt der Cer-Gehalt aber nicht unter 20 Gew-%.

Beispiele für Cer-Mischoxide, die erfindungsgemäß verwendet werden können, sind insbesondere Cer-Zirkon-Mischoxide und Cer-Aluminium-Mischoxide.

In Ausführungsformen der vorliegenden Erfindung beträgt das Verhältnis von Ceroxid in Washcoatschicht B zu Ceroxid in Washcoatschicht A, gerechnet jeweils in g/l und bezogen auf das Volumen des Tragkörpers, 1 : 2 bis 2,5 : 1, insbesondere 1 : 1 bis 2 : 1.

Insbesondere wird Ceroxid in der Washcoatschicht B in einer Menge von 46 bis 180 g/l, bevorzugt von 46 bis 90 g/l und besonders bevorzugt von 46 bis 70 g/l, jeweils bezogen auf das Volumen des Tragkörpers eingesetzt. In der Washcoatschicht A wird Ceroxid in Mengen von 14 bis 95 g/l, bevorzugt von 25 bis 95 g/l und besonders bevorzugt von 46 bis 95 g/l, jeweils bezogen auf das Volumen des Tragkörpers eingesetzt.

In weiteren Ausführungsformen wird Ceroxid in Washcoatschicht A in einer Menge von 25 bis 120 g/l und in Washcoatschicht B in einer Menge von 50 bis 180 g/l, jeweils bezogen auf das Volumen des Tragkörpers eingesetzt.

Die Gesamt-Washcoatbeladung des Tragkörpers beträgt in Ausführungsformen der vorliegenden Erfindung 300 bis 600 g/l, bezogen auf das Volumen des Tragkörpers. Insbesondere beträgt die Beladung mit Washcoatschicht A 150 bis 500 g/l und die Beladung mit Washcoatschicht B 50 bis 300 g/l, jeweils bezogen auf das Volumen des Tragkörpers.

In weiteren Ausführungsformen der vorliegenden Erfindung beträgt die Beladung mit Washcoatschicht A 250 bis 300g/l, und mit Washcoatschicht B 100 bis 200 g/l, jeweils bezogen auf das Volumen des Tragkörpers.

Das Verhältnis Platin zu Palladium in den Washcoatschichten A und B beträgt in Ausführungsformen der vorliegenden Erfindung beispielsweise 2:1 bis 18:1 oder 6:1 bis 16:1, beispielsweise 5: 1, 8:1, 10:1, 12:1 oder 14:1.

In Ausführungsformen der vorliegenden Erfindung ist die Summe von Platin und Palladium, gerechnet jeweils in g/l und bezogen auf das Volumen des Tragkörpers, in Washcoatschicht A und Washcoatschicht B gleich.

In einer weiteren Ausführungsform der vorliegenden Erfindung beträgt das Verhältnis der Konzentrationen von Platin und Palladium in Washcoatschicht B zu Platin und Palladium in Washcoatschicht A, jeweils bezogen auf die Gesamtmasse der jeweiligen Washcoatschicht, gerechnet jeweils in g/l und bezogen auf das Volumen des Tragkörpers, 1:1 bis 1:5.

In Ausführungsformen der vorliegenden Erfindung enthalten Washcoatschicht A und/oder Washcoatschicht B als weiteres Edelmetall Rhodium. Rhodium liegt in diesem Fall insbesondere in Mengen von 0,003 bis 0,35 g/l, bezogen auf das Volumen des Tragkörpers, vor.

Sowohl in der Washcoatschicht A, als auch in der Washcoatschicht B liegen die Edelmetalle Platin und Palladium und gegebenenfalls Rhodium üblicherweise auf geeigneten Trägermaterialien vor. Als solche werden hochoberflächige, hochschmelzende Oxide verwendet, beispielsweise Aluminiumoxid, Siliziumdioxid, Titandioxid, aber auch Mischoxide wie beispielsweise Aluminium-Silizium-Mischoxide und Cer-Zirkon-Mischoxide. In Ausführungsformen der vorliegenden Erfindung wird als Trägermaterial für die Edelmetalle Aluminiumoxid verwendet, insbesondere solches, das durch 1 bis 6 Gew.-%, insbesondere 4 Gew.-%, Lanthanoxid stabilisiert ist.

Es ist bevorzugt, wenn die Edelmetalle Platin, Palladium bzw. Rhodium lediglich auf einem oder mehreren der oben genannten Trägermaterialien geträgert sind und somit nicht mit allen Bestandteilen der jeweiligen Washcoatschicht in enger Berührung stehen. Insbesondere ist es bevorzugt, wenn die Edelmetalle Platin, Palladium bzw. Rhodium nicht auf Ceroxid geträgert sind und auch nicht mit Ceroxid in enger Berührung stehen.

Als Erdalkaliverbindung in der Washcoatschicht A kommen insbesondere Oxide, Carbonate oder Hydroxide von Magnesium, Strontium und Barium in Frage, besonders Magnesiumoxid, Bariumoxid und Strontiumoxid.

Als Alkaliverbindung in der Washcoatschicht A kommen insbesondere Oxide, Carbonate oder Hydroxide von Lithium, Kalium und Natrium in Frage.

In Ausführungsformen der vorliegenden Erfindung liegt die Erdalkali- bzw. Alkaliverbindung in Mengen von 10 bis 50 g/l, besonders 15 bis 20 g/l, berechnet als Erdalkali- bzw. Alkalioxid, vor.

In einer bevorzugten Ausführungsform enthält der Stickoxidspeicherkatalysator mindestens zwei katalytisch aktive Washcoatschichten auf einem Tragköper,
wobei
- eine untere Washcoatschicht A
   o Ceroxid in einer Menge von 14 bis 95 g/l,
   o Platin und Palladium im Massenverhältnis von 8:1 bis 10:1, sowie
   o Magnesiumoxid und/oder Bariumoxid; enthält und
- eine obere Washcoatschicht B über der unteren Washcoatschicht A angeordnet ist und
   o keine Erdalkaliverbindung und keine Alkaliverbindung,
   o Platin und Palladium im Massenverhältnis 8:1 bis 10:1, sowie
   o Ceroxid in einer Menge von 46 bis 180 g/l
enthält.

Besonders bevorzugt ist es, wenn in der genannten Ausführungsform die Washcoatschicht B in Mengen von 250 bis 350 g/l und die Washcoatschicht A in Mengen von 80 bis 130 g/l vorliegt, wobei sich die Mengenangabe g/l jeweils auf das Volumen des Tragkörpers bezieht.

In einer weiteren bevorzugten Ausführungsform der vorliegenden Erfindung betrifft sie ein Katalysatorsystem zur Reduktion von Stickoxiden, das einen Stickoxidspeicherkatalysator und einen SCR-Katalysator umfasst, wobei der Stickoxidspeicherkatalysator mindestens zwei katalytisch aktive Washcoatschichten auf einem Tragkörper enthält,
wobei
- eine untere Washcoatschicht A
   o Ceroxid in einer Menge von 25 bis 120 g/l,
   o Platin und Palladium im Massenverhältnis von 8:1 bis 10:1, sowie
   o Magnesiumoxid und/oder Bariumoxid; enthält und
- eine obere Washcoatschicht B über der unteren Washcoatschicht A angeordnet ist und
   o keine Erdalkaliverbindung und keine Alkaliverbindung,
   o Platin und Palladium im Massenverhältnis 8:1 bis 10:1, sowie
   o Ceroxid in einer Menge von 50 bis 180 g/l
enthält

Als SCR-Katalysator können im erfindungsgemäßen Katalysatorsystem prinzipiell alle in der SCR-Reaktion von Stickoxiden mit Ammoniak aktiven Katalysatoren verwendet werden, insbesondere solche, die dem Fachmann auf dem Gebiet der Autoabgaskatalyse als gebräuchlich bekannt sind. Dies schließt Katalysatoren vom Mischoxid-Typ ebenso ein, wie Katalysatoren auf Basis von Zeolithen, insbesondere von Übergangsmetall-ausgetauschten Zeolithen.

In Ausführungsformen der vorliegenden Erfindung werden SCR-Katalysatoren, die einen kleinporigen Zeolithen mit einer maximalen Ringgröße von acht tetraedrischen Atomen und ein Übergangsmetall enthalten, verwendet. Solche SCR-Katalysatoren sind beispielsweise in EP 2 117 707 A1 und WO2008/132452 beschrieben.

Besonders bevorzugte Zeolithe gehören den Gerüsttypen AEI, CHA, KFI, ERI, LEV, MER oder DDR an und sind besonders bevorzugt mit Kobalt, Eisen, Kupfer oder Mischungen aus zwei oder drei dieser Metalle ausgetauscht.

Unter den Begriff Zeolithe fallen im Rahmen vorliegender Erfindung auch Molsiebe, die bisweilen auch als "zeolithähnliche" Verbindungen bezeichnet werden. Molsiebe sind bevorzugt, wenn sie einem der oben genannten Gerüsttypen angehören. Beispiele sind Silicaaluminiumphosphat-Zeolithe, die unter dem Begriff SAPO bekannt sind und Aluminiumphosphat-Zeolithe, die unter dem Begriff AIPO bekannt sind.

Auch diese sind insbesondere dann bevorzugt, wenn sie mit Kobalt, Eisen, Kupfer oder Mischungen aus zwei oder drei dieser Metalle ausgetauscht sind.

Bevorzugte Zeolithe bzw. Molsiebe sind weiterhin solche, die einen SAR (silica-to-alumina)-Wert von 2 bis 100, insbesondere von 5 bis 50, aufweisen.

Die Zeolithe bzw. Molsiebe enthalten Übergangsmetall insbesondere in Mengen von 1 bis 10 Gew.-%, insbesondere 2 bis 5 Gew.-%, berechnet als Metalloxid, also beispielsweise als Fe₂O₃ oder CuO.

Bevorzugte Ausführungsformen der vorliegenden Erfindung enthalten als SCR-Katalysatoren mit Kupfer, Eisen oder Kupfer und Eisen ausgetauschte Zeolithe oder Molsiebe vom Chabazit-Typ. Entsprechende Zeolithe oder Molsiebe sind beispielsweise unter den Bezeichnungen SSZ-13, SSZ-62, SAPO-34 oder AIPO-34 bekannt, siehe etwa US 6,709,644 und US 8,617,474.

In einer besonders bevorzugten Ausführungsform der vorliegenden Erfindung betrifft sie ein Katalysatorsystem zur Reduktion von Stickoxiden, das einen Stickoxidspeicherkatalysator und einen SCR-Katalysator umfasst, wobei der Stickoxidspeicherkatalysator mindestens zwei katalytisch aktive Washcoatschichten auf einem Tragkörper enthält,
wobei
- eine untere Washcoatschicht A
   o Ceroxid in einer Menge von 14 bis 95 g/l,
   o Platin und Palladium im Massenverhältnis von 8:1 bis 10:1, sowie
   o Magnesiumoxid und/oder Bariumoxid; enthält und
- eine obere Washcoatschicht B über der unteren Washcoatschicht A angeordnet ist und
   o keine Erdalkaliverbindung und keine Alkaliverbindung,
   o Platin und Palladium im Massenverhältnis 8:1 bis 10:1, sowie
   o Ceroxid in einer Menge von 46 bis 180 g/l
   enthält und wobei
   der SCR-Katalysator einen Zeolithen oder ein Molsieb mit Chabazit-Struktur umfasst, der Kupfer in einer Menge von 1 bis 10 Gew.-%, berechnet als CuO und bezogen auf den SCR-Katalysator, enthält.
   In einer weiteren besonders bevorzugten Ausführungsform der vorliegenden Erfindung betrifft sie ein Katalysatorsystem zur Reduktion von Stickoxiden, das einen Stickoxidspeicherkatalysator und einen SCR-Katalysator umfasst, wobei der Stickoxidspeicherkatalysator mindestens zwei katalytisch aktive Washcoatschichten auf einem Tragkörper enthält,
   wobei
- eine untere Washcoatschicht A
   o Ceroxid in einer Menge von 25 bis 120 g/l,
   o Platin und Palladium im Massenverhältnis von 8:1 bis 10:1, sowie
   o Magnesiumoxid und/oder Bariumoxid; enthält und
- eine obere Washcoatschicht B über der unteren Washcoatschicht A angeordnet ist und
   o keine Erdalkaliverbindung und keine Alkaliverbindung,
   o Platin und Palladium im Massenverhältnis 8:1 bis 10:1, sowie
   o Ceroxid in einer Menge von 50 bis 180 g/l
   enthält und wobei
   der SCR-Katalysator einen Zeolithen oder ein Molsieb mit Chabazit-Struktur umfasst, der Kupfer in einer Menge von 1 bis 10 Gew.-%, berechnet als CuO und bezogen auf den SCR-Katalysator, enthält.

Im Katalysatorsystem der vorliegenden Erfindung besteht der Stickoxidspeicherkatalysator aus mindestens zwei katalytisch aktiven Washcoatschichten A und B auf einem Tragkörper. Die Aufbringung der katalytisch aktiven Washcoatschichten A und B auf den Tragkörper erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.

Als Tragkörper eignen sich grundsätzlich alle bekannten katalytisch inerten Tragkörper für Heterogenkatalysatoren. Bevorzugt sind monolithische und monolithähnliche Durchflusswabenkörper aus Keramik und Metall, sowie Partikelfiltersubstrate, wie sie üblicherweise zur Reinigung von Dieselmotorenabgasen eingesetzt werden. Ganz besonders bevorzugt sind keramische Durchflusswabenkörper und keramische Wandflussfiltersubstrate aus Cordierit, Aluminiumtitanat oder Siliziumcarbid.

Auch der SCR-Katalysator wird bevorzugt auf einen katalytisch inerten Tragkörper aufgebracht und zwar nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Als Tragkörper eignen sich auch hier grundsätzlich alle bekannten katalytisch inerten Tragkörper für Heterogenkatalysatoren, wobei monolithische und monolithähnliche Durchflusswabenkörper aus Keramik und Metall, sowie Partikelfiltersubstrate, wie sie üblicherweise zur Reinigung von Dieselmotorenabgasen eingesetzt werden, bevorzugt sind. Ganz besonders bevorzugt sind keramische Durchflusswabenkörper und keramische Wandflussfiltersubstrate aus Cordierit, Aluminiumtitanat oder Siliziumcarbid.

Zwischen dem Stickoxidspeicherkatalysator und dem SCR-Katalysator kann auch ein Filter zur Verminderung von Partikelemissionen platziert sein. Unter Filter wird dabei insbesondere ein keramisches Wandflussfiltersubstrat aus beispielsweise Cordierit verstanden. Der Filter kann auch mit einem Katalysator zum Umsatz von HC/CO beschichtet sein. In einer bevorzugten Ausführungsform enthält der Filter kein OSC-(Oxygen Storage Compound) Material.

Im erfindungsgemäßen Katalysatorsystem können Stickoxidspeicherkatalysator und SCR-Katalysator nicht nur auf zwei getrennten katalytisch inerten Tragkörpern aufgebracht sein. Sie können auch gemeinsam auf einem einzigen katalytisch inerten Tragkörper aufgebracht sein. In diesem Fall wird zum Beispiel der Stickoxidspeicherkatalysator ausgehend von einem Ende des Tragkörpers über weniger als seine gesamte Länge beschichtet, während der SCR-Katalysator ausgehend vom anderen Ende des Tragkörpers ebenfalls über weniger als seine gesamte Länge beschichtet wird.

In Ausführungsformen der vorliegenden Erfindung beträgt die Länge E der katalytisch aktiven Zone, die den Stickoxidspeicherkatalysator umfasst, 20 bis 70%, 40 bis 60% oder 45 bis 50% der Gesamtlänge L des Tragkörpers. Die Länge Z der katalytisch aktiven Zone, die den SCR-Katalysator umfasst, beträgt in Ausführungsformen der vorliegenden Erfindung 20 bis 70% , 40 bis 60% oder 45 bis 50% der Gesamtlänge L des Tragkörpers. In bevorzugten Ausführungsformen betragen die Längen E und Z beide 50% der Gesamtlänge L.

Die Summe der Länge E der ersten katalytisch aktiven Zone und der Länge Z der zweiten katalytisch aktiven Zone kann genau der Gesamtlänge L entsprechen. Insbesondere aus produktionstechnischen Gründen kann sie aber in Ausführungsformen der vorliegenden Erfindung kleiner als die Gesamtlänge L sein. In diesen Fällen ist eine bestimmte Länge der Gesamtlänge L zwischen den beschichteten Längen E und Z unbeschichtet. Beispielsweise beträgt die Summe der Länge E der ersten katalytisch aktiven Zone und der Länge Z der zweiten katalytisch aktiven Zone L x 0,8 bis L x 0,999.

Beim bestimmungsgemäßen Gebrauch des erfindungsgemäßen Katalysatorsystems muss das Abgas zuerst den Stickoxidspeicherkatalysator und danach den SCR-Katalysator durchströmen. Es eignet sich unter dieser Voraussetzung in hervorragender Weise zur Konvertierung von NOₓ in Abgasen von Kraftfahrzeugen, die mit mager betriebenen Motoren, etwa Dieselmotoren, betrieben werden. Es erreicht eine gute NOx-Konvertierung bei Temperaturen von circa 200 bis 450°C, ohne dass sie bei hohen Temperaturen negativ beeinflusst wird. Das erfindungsgemäße Katalysatorsystem ist somit für Euro 6 Anwendungen geeignet.

Die vorliegende Erfindung betrifft auch ein Verfahren zur Konvertierung von NOₓ in Abgasen von Kraftfahrzeugen, die mit mager betriebenen Motoren, etwa Dieselmotoren, betrieben werden, das dadurch gekennzeichnet ist, dass das Abgas über ein Katalysatorsystem zur Reduktion von Stickoxiden geleitet wird, das einen Stickoxidspeicherkatalysator und einen SCR-Katalysator umfasst, wobei der Stickoxidspeicherkatalysator aus mindestens zwei katalytisch aktiven Washcoatschichten A und B auf einem Tragkörper besteht und
- die Washcoatschicht A direkt auf dem Tragkörper angeordnet ist und Ceroxid, eine Erdalkaliverbindung und/oder eine Alkaliverbindung, sowie Platin und Palladium enthält; und
- die Washcoatschicht B über der Washcoatschicht A angeordnet ist und Ceroxid, sowie Platin und Palladium enthält und frei ist von Alkali- und Erdalkaliverbindungen;
dadurch gekennzeichnet, dass
- das Verhältnis von Ceroxid in Washcoatschicht B zu Ceroxid in Washcoatschicht A, gerechnet jeweils in g/l und bezogen auf das Volumen des Tragkörpers, 1:2 bis 3:1 beträgt, wobei die Summe von Ceroxid in Washcoatschicht A und Washcoatschicht B, gerechnet in g/l und bezogen auf das Volumen des Tragkörpers, 100 bis 240 g/l beträgt; und wobei das Abgas so durch das Katalysatorsystem geleitet wird, dass es zuerst den Stickoxidspeicherkatalysator und danach den SCR-Katalysator durchströmt.

Zur Regenerierung des Stickoxidspeicherkatalysator und um Ammoniak zu bilden, welches in der anschließenden Phase unter mageren Abgasbedingungen Stickoxide zu Stickstoff umsetzt, wird das Abgas periodisch auf lambda < 1 (fettes Abgas) gestellt. Der Wechsel zu lambda < 1 kann dabei innermotorisch durch z.B. Nacheinspritzung von Treibstoff oder aber auch durch Einspritzung von Reduktionsmittel direkt vor den Stickoxidspeicherkatalysator erfolgen.

Ausgestaltungen des erfindungsgemäßen Verfahrens hinsichtlich des Katalysatorsystems, einschließlich des Stickoxidspeicherkatalysators und des SCR-Katalysators, entsprechen den oben stehenden Beschreibungen.

Die Erfindung wird in den nachstehenden Beispielen und Figuren näher erläutert.

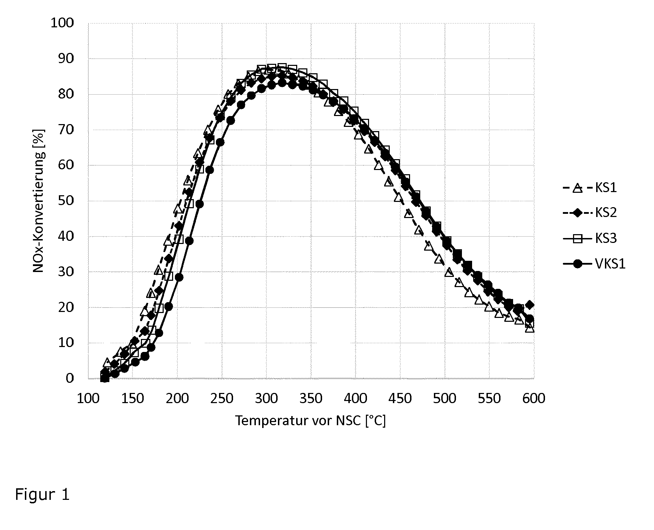

Figur 1: NOx-Konvertierung der Katalysatorsysteme KS1, KS2, KS3 und VKS1 in Abhängigkeit von der Temperatur.

### Beispiel 1

a) Zur Herstellung eines erfindungsgemäßen Katalysatorsystems wird ein wabenförmiger Keramikträger mit einer ersten Washcoatschicht A beschichtet, die Pt und Pd geträgert auf einem Lanthan-stabilisiertem Alumina, Ceroxid in einer Menge 47 g/l, sowie 17 g/l Bariumoxid und 15 g/l Magnesiumoxid enthält. Die Beladung von Pt und Pd beträgt dabei 1,77 g/l bzw. 0,177 g/l und die Gesamtbeladung der Washcoatschicht 181 g/l bezogen auf das Volumen des Keramik-Trägers.
b) Auf die erste Washcoatschicht wird eine weitere Washcoatschicht B aufgebracht, die Pt, Pd sowie Rh geträgert auf einem Lanthan-stabilisiertem Alumina enthält. Die Beladung von Pt, Pd und Rh in dieser Washcoatschicht beträgt 1,77 g/l bzw. 0,177 g/l bzw. 0,177 g/l. Die Washcoatschicht B enthält außerdem 94 g/l Ceroxid bei einer Washcoatbeladung der Schicht B von 181 g/l.
   Der so erhaltene Katalysator wird nachstehend SPK1 genannt.
c) Zur Herstellung des SCR-Katalysators wird ein wabenförmiger Keramikträger mit einem Zeolithen vom Chabazit-Typ mit einem SAR von 28 und mit Kupfer ausgetauscht beschichtet. Der Washcoat setzt sich zusammen aus 85 Gew.-% Zeolith, 3 Gew.-% CuO und 12 Gew.-% Aluminiumoxid.
   Der so erhaltene Katalysator wird nachstehend SCRK1 genannt.
d) Die Katalysatoren SPK1 und SCRK1 werden zu einem Katalysatorsystem kombiniert, das nachstehend KS1 genannt wird.

### Beispiel 2

Die Schritte a) bis d) des Beispiels 1 werden wiederholt, mit dem Unterschied, dass in Schritt a) Ceroxid in einer Menge von 70 g/l und in Schritt b) Ceroxid in einer Menge von 70 g/l eingesetzt wird.

Das so erhaltene Katalysatorsystem wird nachstehend KS2 genannt.

### Beispiel 3

Die Schritte a) bis d) des Beispiels 1 werden wiederholt, mit dem Unterschied, dass in Schritt a) Ceroxid in einer Menge von 93 g/l und in Schritt b) Ceroxid in einer Menge von 47 g/l eingesetzt wird.

Das so erhaltene Katalysatorsystem wird nachstehend KS3 genannt.

### Vergleichsbeispiel 1

Die Schritte a) bis d) des Beispiels 1 werden wiederholt, mit dem Unterschied, dass in Schritt a) Ceroxid in einer Menge von 116 g/l statt 47 g/l und in Schritt b) Ceroxid in einer Menge von 24 g/l statt 94 g/l eingesetzt wird.

Das so erhaltene Katalysatorsystem wird nachstehend VKS1 genannt.

### Beispiele 4 bis 6

Zur Herstellung weiterer erfindungsgemäßer Katalysatorsysteme wurden in Analogie zu Beispiel 1 a) bzw. b) die in nachstehender Tabelle 1 genannten Stickoxidspeicherkatalysatoren bzw. die in Tabelle 2 genannten SCR-Katalysatoren hergestellt und zu den in Tabelle 3 genannten Katalysatorsystemen kombiniert.

**Tabelle 1**

| Katalysator | Ceroxid Washcoat A [g/l] | Ceroxid Washcoat B [g/l] | Pt : Pd-Verhältnis Schicht A | Pt : Pd-Verhältnis Schicht B |
|---|---|---|---|---|
| SPK4 | 100 | 70 | 10 : 1 | 2 : 1 |
| SPK5 | 100 | 100 | 5 : 1 | 5 : 1 |
| SPK6 | 70 | 100 | 10 : 1 | 5 : 1 |

**Tabelle 2**

| Katalysator | Zeolith | Metall | Metallmenge in Gew.-%, berechnet als Oxid (CuO bzw Fe₂O₃) |
|---|---|---|---|
| SCRK2 | SAPO-34 | Cu | 2,5 |
| SCRK3 | LEV | Cu | 4,0 |
| SCRK4 | KFI | Fe | 3,5 |

**Tabelle 3**

| Katalysator | Stickoxidspeicherkatalysator | SCR-Katalysator |
|---|---|---|
| KS4 | SPK4 | SCRK4 |
| KS5 | SPK5 | SCRK2 |
| KS6 | SPK6 | SCRK1 |

Bestimmung der NOx-Konvertierung von KS1, KS2, KS3 und VKS1
a) Zunächst wurden KS1, KS2, KS3 und VKS1 16h bei 800°C in hydrothermaler Atmosphäre gealtert.
b) Die NOx-Konvertierung des erfindungsgemäßen Katalysatorsystems KS1, KS2, KS3 und des Vergleichskatalysatorsystems VKS1 in Abhängigkeit von der Temperatur vor dem Katalysator wurde in einem Modellgasreaktor im sog. NOx-Umsatztest bestimmt.

In diesem wird synthetisches Abgas mit einer Stickstoffmonoxidkonzentration von 500ppm, jeweils 10 Vol.-% Kohlenstoffdioxid und Wasser, einer Konzentration von 50ppm eines kurzkettigen Kohlenwasserstoffgemisches (bestehend aus 33 ppm Propen und 17 ppm Propan) sowie einem Restsauerstoffgehalt von 7 Vol.-% bei einer Raumgeschwindigkeit von 50k/h in einem Modellgasreaktor über die jeweilige Katalysatorprobe geleitet, wobei die Gasmischung abwechselnd 80s lang einen Sauerstoffüberschuss enthält ("mageres" Gasgemisch mit Luftzahl λ von 1,47) währenddessen Stickoxide eingespeichert werden, und zur Regeneration der Katalysatorprobe 10s lang ein Sauerstoffdefizit aufweist ("fettes" Gasgemisch mit Luftzahl λ von 0,92; durch Zumischen von 5,5 Vol.-% Kohlenstoffmonoxid bei gleichzeitiger Absenkung des Restsauerstoffgehalts auf 1 Vol.-%).

Dabei wird die Temperatur mit 7,5 °C/min von 600°C auf 150°C abgesenkt und der Umsatz über jeden 90s dauernden Mager- Fett-Zyklus ermittelt. Die NOx Regenerationsfähigkeit bei 200°C ist wichtig, um Fahrverhalten im städtischen Bereich abzubilden, bei 450°C für Autobahnfahrten. Um die Euro 6 Abgasnorm zu erfüllen, ist es dabei besonders wichtig über diesen gesamten Temperaturbereich eine hohe NOx-Regenerationsfähigkeit zu zeigen.

Figur 1 zeigt die so bestimmte NOx-Konvertierung des erfindungsgemäßen Katalysatorsysteme KS1, KS2, KS3 und des Vergleichssystems VKS1.

Es ergibt sich daraus, dass die NOx-Konvertierung des Vergleichskatalysatorsystems VKS1 bei Temperaturen bis ca. 350°C deutlich schlechter ist als die der erfindungsgemäßen Katalysatorsysteme KS1 bis KS3. So liegt beispielsweise die NOx-Konvertierung von VKS1 bei 250°C bei ca. 67%, während sie bei KS1 bis KS3 bei ca. 75% liegt.

## Patentansprüche

1. Katalysatorsystem zur Reduktion von Stickoxiden, das einen Stickoxidspeicherkatalysator und einen SCR-Katalysator umfasst, wobei der Stickoxidspeicherkatalysator aus mindestens zwei katalytisch aktiven Washcoatschichten A und B auf einem Tragkörper besteht und
- die Washcoatschicht A direkt auf dem Tragkörper angeordnet ist und Ceroxid, eine Erdalkaliverbindung und/oder eine Alkaliverbindung, sowie Platin und Palladium enthält; und
- die Washcoatschicht B über der Washcoatschicht A angeordnet ist und Ceroxid, sowie Platin und Palladium enthält und frei ist von Alkali- und Erdalkaliverbindungen;
**dadurch gekennzeichnet, dass**
- das Verhältnis von Ceroxid in Washcoatschicht B zu Ceroxid in Washcoatschicht A, gerechnet jeweils in g/l und bezogen auf das Volumen des Tragkörpers, 1:2 bis 3:1 beträgt, wobei die Summe von Ceroxid in Washcoatschicht A und Washcoatschicht B, gerechnet in g/l und bezogen auf das Volumen des Tragkörpers, 100 bis 240 g/l beträgt; und

2. Katalysatorsystem nach Anspruch 1, **dadurch gekennzeichnet, dass** die Washcoatschicht B Ceroxid in einer Menge von 46 bis 180 g/l enthält.

3. Katalysatorsystem nach Anspruch 1, **dadurch gekennzeichnet, dass** die Washcoatschicht A Ceroxid in einer Menge von 14 bis 95 g/l enthält.

4. Katalysatorsystem nach einem oder mehreren der Ansprüche 1 bis 3, **dadurch gekennzeichnet, dass** die Gesamt-Washcoatbeladung des Tragkörpers 300 bis 600g/l, bezogen auf das Volumen des Tragkörpers, beträgt.

5. Katalysatorsystem Anspruch 4, **dadurch gekennzeichnet, dass** die Beladung mit Washcoatschicht A 150 bis 500 g/l und die Beladung mit Washcoatschicht B 50 bis 300 g/l, jeweils bezogen auf das Volumen des Tragkörpers, beträgt.

6. Katalysatorsystem nach Anspruch 4, **dadurch gekennzeichnet, dass** die Beladung mit Washcoatschicht A 250 bis 300g/l und mit Washcoatschicht B 100 bis 200 g/l, jeweils bezogen auf das Volumen des Tragkörpers, beträgt.

7. Katalysatorsystem nach einem oder mehreren der Ansprüche 1 bis 6, **dadurch gekennzeichnet, dass** das Verhältnis Platin zu Palladium 2:1 bis 18:1 beträgt.

8. Katalysatorsystem nach einem oder mehreren der Ansprüche 1 bis 7, **dadurch gekennzeichnet, dass** die Erdalkaliverbindung in Washcoatschicht A Magnesiumoxid, Bariumoxid und/oder Strontiumoxid ist.

9. Katalysatorsystem nach einem oder mehreren der Ansprüche 1 bis 8, **dadurch gekennzeichnet, dass** der SCR-Katalysator einen kleinporigen Zeolithen mit einer maximalen Ringgröße von acht tetraedrischen Atomen und ein Übergangsmetall enthält.

10. Katalysatorsystem nach einem oder mehreren der Ansprüche 1 bis 9, **dadurch gekennzeichnet, dass** der SCR-Katalysator einen Zeolithen enthält, der dem Gerüsttyp AEI, CHA, KFI, ERI, LEV, MER oder DDR angehört und mit Kobalt, Eisen, Kupfer oder Mischungen aus zwei oder drei dieser Metalle ausgetauscht ist.

11. Katalysatorsystem nach einem oder mehreren der Ansprüche 1 bis 10, **dadurch gekennzeichnet, dass** der SCR-Katalysator einen Zeolithen vom Chabazit-Typ enthält, der mit Kupfer, Eisen oder Kupfer und Eisen ausgetauscht ist.

12. Katalysatorsystem nach einem oder mehreren der Ansprüche 1 bis 11, **dadurch gekennzeichnet, dass** der Stickoxidspeicherkatalysator
- eine untere Washcoatschicht A
o Ceroxid in einer Menge von 14 bis 95 g/l,
o Platin und Palladium im Massenverhältnis von 8:1 bis 10:1, sowie
o Magnesiumoxid und/oder Bariumoxid; enthält und
- eine obere Washcoatschicht B über der unteren Washcoatschicht A angeordnet ist und
o keine Erdalkaliverbindung und keine Alkaliverbindung,
o Platin und Palladium im Massenverhältnis 8:1 bis 10:1, sowie
o Ceroxid in einer Menge von 46 bis 180 g/l
enthält und wobei
der SCR-Katalysator einen Zeolithen oder ein Molsieb mit Chabazit-Struktur umfasst, der Kupfer in einer Menge von 1 bis 10 Gew.-%, berechnet als CuO und bezogen auf den SCR-Katalysator, enthält.

13. Katalysatorsystem nach einem oder mehreren der Ansprüche 1 bis 11, **dadurch gekennzeichnet, dass** der Stickoxidspeicherkatalysator mindestens zwei katalytisch aktive Washcoatschichten auf einem Tragkörper enthält, wobei
- eine untere Washcoatschicht A
o Ceroxid in einer Menge von 25 bis 120 g/l,
o Platin und Palladium im Massenverhältnis von 8:1 bis 10:1, sowie
o Magnesiumoxid und/oder Bariumoxid; enthält und
- eine obere Washcoatschicht B über der unteren Washcoatschicht A angeordnet ist und
o keine Erdalkaliverbindung und keine Alkaliverbindung,
o Platin und Palladium im Massenverhältnis 8:1 bis 10:1, sowie
o Ceroxid in einer Menge von 50 bis 180 g/l
enthält und wobei
der SCR-Katalysator einen Zeolithen oder ein Molsieb mit Chabazit-Struktur umfasst, der Kupfer in einer Menge von 1 bis 10 Gew.-%, berechnet als CuO und bezogen auf den SCR-Katalysator, enthält.

14. Katalysatorsystem nach einem oder mehreren der Ansprüche 1 bis 13, **dadurch gekennzeichnet, dass** Stickoxidspeicherkatalysator und SCR-Katalysator auf verschiedenen Tragkörpern angeordnet sind oder dass Stickoxidspeicherkatalysator und SCR-Katalysator auf demselben Tragkörper angeordnet sind.

15. Verfahren zur Konvertierung von NOₓ in Abgasen von Kraftfahrzeugen, die mit mager betriebenen Motoren betrieben werden, **dadurch gekennzeichnet, dass** das Abgas über ein Katalysatorsystem zur Reduktion von Stickoxiden geleitet wird, das einen Stickoxidspeicherkatalysator und einen SCR-Katalysator umfasst, wobei der Stickoxidspeicherkatalysator aus mindestens zwei katalytisch aktiven Washcoatschichten A und B auf einem Tragkörper besteht und
- die Washcoatschicht A direkt auf dem Tragkörper angeordnet ist und Ceroxid, eine Erdalkaliverbindung und/oder eine Alkaliverbindung, sowie Platin und Palladium enthält; und
- die Washcoatschicht B über der Washcoatschicht A angeordnet ist und Ceroxid, sowie Platin und Palladium enthält und frei ist von Alkali- und Erdalkaliverbindungen;
**dadurch gekennzeichnet, dass**
das Verhältnis von Ceroxid in Washcoatschicht B zu Ceroxid in Washcoatschicht A, gerechnet jeweils in g/l und bezogen auf das Volumen des Tragkörpers, 1:2 bis 3:1 beträgt, wobei die Summe von Ceroxid in Washcoatschicht A und Washcoatschicht B, gerechnet in g/l und bezogen auf das Volumen des Tragkörpers, 100 bis 240 g/l beträgt; wobei das Abgas so durch das Katalysatorsystem geleitet wird, dass es zuerst den Stickoxidspeicherkatalysator und danach den SCR-Katalysator durchströmt.
